# EUROPEAN PATENT SPECIFICATION

(11) **EP 2 894 826 B1**
(45) Date of publication and mention of the grant of the patent: **10.05.2017**
(21) Application number: 14197244.8
(22) Date of filing: 10.12.2014
(51) Int. Cl.: H04L 29/06

(54) **VIDEO CALL SET UP IN AN ESTABLISHED AUDIO CALL**
VIDEOANRUFVERBINDUNGSAUFBAU IN EINEM AUFGEBAUTEN AUDIOANRUF
ÉTABLISSEMENT D'APPEL VIDÉO DANS UN APPEL AUDIO ÉTABLI

(30) Priority: 13.01.2014 US 201414153889
(43) Date of publication of application: 15.07.2015
(73) Proprietor: Mitel Networks Corporation, Ottawa, ON K2K 2W7 (CA)
(72) Inventor: Yin, Jianqi, Kanata, Ontario K2T 1H1 (CA)
(74) Representative: McDougall, James

(56) References cited:
- EP-A1- 2 120 440
- EP-A1- 2 493 166
- US-A1- 2008 317 010
- T. Jalkanen: "Video Share Interoperability Specification version 2.0", GSM Association , no. IR.74 28 October 2014 (2014-10-28), XP002739402, GSMA Retrieved from the Internet: URL:http://www.gsma.com/newsroom/wp-conten t/uploads//IR.74-v2.0.pdf [retrieved on 2015-05-08]

## Description

### BACKGROUND

This specification relates to network communications. Internet Protocol (IP) communications devices, such as Voice over IP (VoIP) telephones and VoIP call servers enable users to communicate over an IP network. For example, a VoIP call server can receive, from one VoIP telephone, a request to initiate a call with a second VoIP telephone. The request can include, for example, call features that are supported by the VoIP telephone that requested the initiation of the call. The VoIP call server can proceed to set up the call through a negotiation process that use the data included in the request to negotiate the call features for the established call. Document US2008317010, titled SYSTEM AND METHOD FOR SIGNALING OPTIMIZATION IN IMS SERVICES BY USING A SERVICE DELIVERY PLATFORM, discloses a method of reducing signalling traffic in the provision of data services to a plurality of user endpoints (UEs), the UEs being in communication with a radio access network, the radio access network being in communication with an IP multimedia subsystem (IMS) core for providing data service to the UEs, the data service including a video share service. Document EP2120440, titled A METHOD, TERMINAL AND SYSTEM FOR IMPLEMENTING VIDEO BINDING IN A VOICE COMMUNICATION NETWORK, discloses a terminal, a network device and a unit for storing subscription information for a video binding service of the terminal.

### SUMMARY

In general, one innovative aspect of the subject matter described in this specification can be embodied in methods that include the actions of initiating, by a first endpoint and through a call server, a call with a second endpoint; after the call is established, transmitting, by the first endpoint and independent of the call server, first information specifying a video communication capability of the first endpoint that the call server did not setup in the established call; receiving, by the first endpoint, second information specifying that the second endpoint has the video communication capability; and establishing, by the first endpoint and based on the first information and second information, video communication between the first endpoint and the second endpoint independent of the call server. This example is non-restrictive and other embodiments are contemplated, for example, it is possible that the second endpoint sends the first information and the first endpoint sends the second information depending on which endpoint initiates the offer first to try to setup the video after the audio call. Other embodiments of this aspect include corresponding systems, apparatus, and computer programs, configured to perform the actions of the methods, encoded on computer storage devices. The invention is defined by the independent claims together with their dependent claims. These and other embodiments can each optionally include one or more of the following features. Initiating a call with a second endpoint can include sending an invitation including a first set of call parameters to the call server. Methods can include the actions of receiving, from the call server, a second set of call parameters for transmitting audio to the second endpoint, the second set of parameters not including a full set of parameters necessary to transmit video to the second endpoint; and transmitting an acknowledgment to the call server.

Transmitting first information specifying a video communication capability of the first endpoint can include transmitting the first information specifying the video communication capability over a real-time control protocol (RTCP) channel. Receiving second information specifying that the second endpoint has the video communication capability can include receiving the second information over the RTCP channel.

Transmitting first information can include transmitting a first set of video codecs that the first endpoint uses to transmit video. Receiving second information can include receiving a second set of video codecs that the second endpoint uses to transmit video. Establishing the video communication capability can include selecting a video codec that is included in each of the first set of video codecs and a second set of video codecs.

Establishing the video communication capability independent of the call server can include establishing the video communication capability between the first endpoint and the second endpoint over the RTCP channel. Establishing the video communication capability can include establishing a video communication capability over which whiteboard data are transmitted. Establishing the video communication capability independent of the call server can include negotiating, by the first endpoint and the second endpoint and over a channel that bypasses the call server, the parameters that will be used to setup a video call between the first endpoint and the second endpoint.

Particular embodiments of the subject matter described in this specification can be implemented so as to realize one or more of the following advantages. Video calls can be established between endpoints after an audio call has already been established. Once an audio call has been established, endpoints can directly negotiate a video call without intervention by the call server that established the audio call. Video calls can be set up independent of whether a call server that negotiates a call between endpoints supports the set up of video calls.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram illustrating an example data flow for setting up an IP call using a call server.
FIG. 2 is a block diagram of an example data flow for setting up a video call independent of a call server.
FIG. 3 is a flow chart of an example process for setting up a video call independent of a call server.
FIG. 4A is a block diagram of an example network configuration in which a video call can be set up independent of a call server.
FIG. 4B is a block diagram of another example network configuration in which a video call can be set up independent of a call server.
FIG. 5 is a block diagram of an example endpoint that sets up video calls independent of a call server.

Like reference numbers and designations in the various drawings indicate like elements.

### DETAILED DESCRIPTION

Methods, systems, and apparatus that establish video call capabilities after the set up of an audio call are described in this document. For example, an Internet Protocol (IP) call server can establish an audio call between IP endpoints (e.g., IP telephones, computers, or other IP communication devices) using the Session Initiation Protocol (SIP) or another protocol. After the audio call has been established by the call server the two IP endpoints can communicate directly with each other using the parameters specified during the audio call set up. In some implementations, the IP endpoints communicate directly with each other to negotiate parameters that can be used to set up additional communications capabilities that were not set up by the call server, or the call server does not support the capabilities that the additional communication requires. In a particular example, the two IP endpoints can communicate with each other to establish video communications between the two IP endpoints.

The video communications can include a live video call between the two endpoints. The live video call allows motion video captured by a video device of one IP endpoint (e.g., a camera of the IP endpoint) to be transmitted to the other IP endpoint. The video communications can also, or alternatively, include whiteboard capabilities that allow IP endpoints that are included in the call to present a common workspace with which users at each of the IP endpoints can interact. Other video communications capabilities, such as screen sharing or other data sharing, can also be facilitated using the techniques discussed in this document. For brevity, the terms video call and video communications will be used in the descriptions that follow. The term "video" is intended to be inclusive of the capabilities identified above, as well as other data transfer capabilities that can be established using the techniques described in this document.

As described in more detail below, the two IP endpoints can utilize an administrative channel (e.g., a Real Time Control Protocol (RTCP) channel of the audio call) to directly negotiate the parameters that will be used to establish the video communications between the IP endpoints. For example, the IP endpoints can send and receive information over the administrative channel regarding the video communications capabilities of the respective IP endpoints.

Communications over the administrative channel are not routed through the call server, which enables the IP endpoints to set up communications capabilities that are not supported by the call server. For example, two (or more) IP endpoints can establish video communications with each other even if the call server is not capable of setting up video communications between the IP endpoints. Additionally, the communications between the IP endpoints in this example are considered to be direct communications between the IP endpoints because the communications do not require the call server to facilitate the communications.

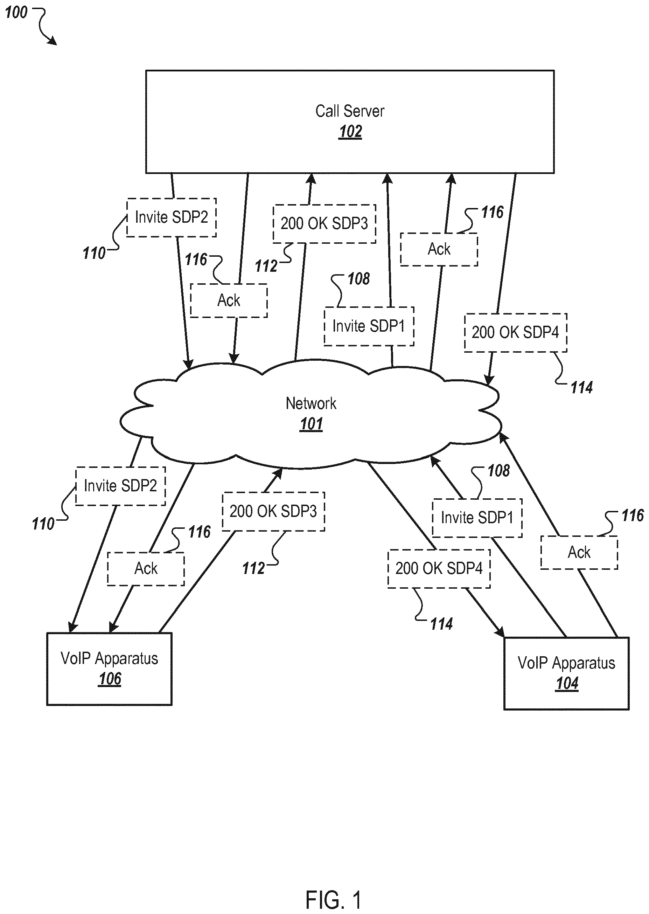

FIG. 1 is a block diagram illustrating an example data flow 100 for setting up an IP call using a call server 102. The IP call can be set up between a Voice over IP (VoIP) Apparatus 104 and a VoIP Apparatus 106, thereby enabling the VoIP Apparatus 104 and the VoIP Apparatus 106 to communicate over a network 101. The network 101 can be, for example, a local area network, a wide-area network, the Internet, or a combination thereof. The network 101 can be implemented as a wire line network, a wireless network, or a combination thereof.

As illustrated by FIG. 1, the VoIP Apparatus 104 can initiate a call with the VoIP Apparatus 106 by transmitting a SIP invite 108 that includes a first set of SDP parameters (SDP1). The first set of SDP parameters can include, for example, details regarding the media session characteristics that are supported by the VoIP Apparatus 104. For example, the first set of SDP parameters can specify an IP address of the VoIP Apparatus 104, port numbers of media streams of the VoIP Apparatus 104, audio and/or video codecs that are used by the VoIP Apparatus 104, bit rates supported by the VoIP apparatus 104, a screen size and/or resolution of a video screen that is included in the VoIP Apparatus 104.

The VoIP Apparatus 104 transmits the SIP invite 108 to the call server 102 over the network 101. The call server 102 receives the SIP invite 108 and transmits a SIP invite 110 to the VoIP Apparatus 106 over the network 101.

In some implementations, the SIP invite 110 includes a second set of SDP parameters (SDP 2) that can differ from the first set of SDP parameters. For example, assume that the call server 102 supports set up of audio calls between the VoIP Apparatus 104 and the VoIP Apparatus 106, but that the call server 102 does not support the set up of video calls. In this example, the call server 102 may create the second set of SDP parameters by removing from the first set of SDP parameters those SDP parameters that are used to set up video calls between the VoIP Apparatus 104 and the VoIP Apparatus 106. For example, if the first set of SDP parameters specifies video codecs that are used by the VoIP Apparatus 104 and/or a screen resolution of the VoIP Apparatus 104, the call server 102 may remove these SDP parameters from the first set of SDP parameters, and create the second set of SDP parameters based on the remaining SDP parameters in the first set.

The VoIP Apparatus 106 receives the SIP invite 110, and responds with a 200 OK message 112 that includes a third set of SDP parameters (SDP3). The third set of SDP parameters can specify an IP address of the VoIP Apparatus 106, port numbers of media streams of the VoIP Apparatus 106, and the media session characteristics that are supported by the VoIP Apparatus 106. The VoIP Apparatus 106 transmits the 200 OK message 112 to the call server 102, which selects a fourth set of SDP parameters (SDP 4) that will be used to establish the call between the VoIP Apparatus 104 and the VoIP Apparatus 106. The fourth set of SDP (SDP4) may differ from the third set of SDP (SDP3), for reasons similar to those described above.

The call server 102 sends a 200 OK message 114, which includes the fourth set of SDP parameters (SDP 4), to the VoIP Apparatus 104. In response to receiving the 200 OK message 114, the VoIP Apparatus 104 transmits an acknowledgment 116 to the call server 102, which in turn, transmits the acknowledgment 116 to the VoIP Apparatus 106. The receipt of the acknowledgment 116 by the VoIP Apparatus 106 completes the call set up between the VoIP Apparatus 104 and the VoIP Apparatus 106. Once the call is established, the VoIP Apparatus 104 and the VoIP Apparatus 106 can directly communicate with each other over the network 101 (i.e., without transmitting messages through the call server 102).

The call that is established by the call server 102 will generally only include services that are supported by the call server 102. For example, if the call server 102 only supports audio call set up, then the call server 102 will not set up a video call between the VoIP Apparatus 104 and the VoIP Apparatus 106 even if the VoIP Apparatus 104 and the VoIP Apparatus 106 both support video call capabilities. Rather, the call server 102 may simply remove or disable any SDP parameters related to setting up a video call from the messages received from the VoIP Apparatus 104 and the VoIP Apparatus 106.

In some implementations, the VoIP Apparatus 104 and the VoIP Apparatus 106 can be configured to set up a video call even if the call server 102 does not set up a video call. For example, after an audio portion of the call is set up by the call server 102, the VoIP Apparatus 104 and the VoIP Apparatus 106 can exchange video call parameters (e.g., video codecs, resolution information, frame rate information, and other video call parameters) over an administrative channel that is established between the VoIP Apparatus 104 and the VoIP Apparatus 106 as part of the audio call set up. For example, the VoIP Apparatus 104 and the VoIP Apparatus 106 can use an RTCP channel to exchange video call parameters.

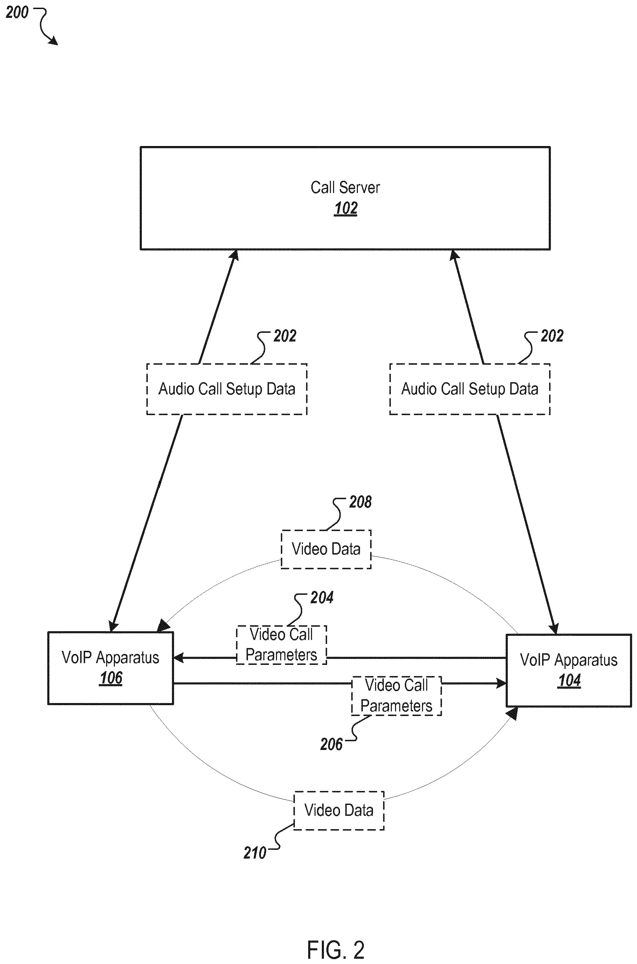

FIG. 2 is a block diagram of an example data flow 200 for setting up a video call independent of a call server. As illustrated by FIG. 2, an audio call between the VoIP Apparatus 104 into the VoIP Apparatus 106 can be negotiated by the call server 102 using audio call setup data 202 in a manner similar to that described above with respect to FIG. 1.

Once the audio call has been set up by the call server 102, the VoIP Apparatus 104 and the VoIP Apparatus 106 can directly communicate with each other (e.g., by way of network 101) to set up a video call in addition to the previously established audio call. Thus, the video call can be set up independent of (e.g., without transmitting data to) the call server 102. In some implementations, the VoIP Apparatus 104 and the VoIP Apparatus 106 can set up the video call using an offer/answer model similar to that used by SIP to set up IP calls between IP endpoints. For example, the VoIP Apparatus 104 can transmit video call parameters 204 directly (e.g., over the network 101) to the VoIP Apparatus 106 (e.g., using an administrative channel, such as an RTCP channel). The video call parameters 204 can include, for example, as SIP invite message specifying SDP parameters related to setting up a video call, thereby informing the VoIP Apparatus 106 that the VoIP Apparatus 104 has the capability to transmit and receive video. The VoIP Apparatus 104 can transmit, for example, SDP parameters (or other information) specifying video codecs, frame rates, screen resolution data, and/or other information specifying the video communication capabilities of the VoIP Apparatus 104.

If the VoIP Apparatus 106 also has the capability to transmit and receive video, the VoIP Apparatus 106 will identify the SDP parameters that were included in the video call parameters 204 by the VoIP Apparatus 104 as parameters that are used to set up a video call. In response to receiving these video call parameters 204, the VoIP Apparatus 106 can respond by providing video call parameters 206 directly to the VoIP Apparatus 104 (e.g., over the network 101, but without transmitting the video call parameters 206 to the call server 102). For example, the VoIP Apparatus 106 can transmit to the VoIP Apparatus 104 a 200 OK message including SDP parameters (or other information) specifying video codecs, frame rates, screen resolution data, and/or other information specifying the video communication capabilities of the VoIP Apparatus 106.

In response to receiving the video call parameters 206, the VoIP Apparatus 104 can select the video call parameters that will be used to establish a video call with the VoIP Apparatus 106. For example, based on the video call parameters 204 and the video call parameters 206, the VoIP Apparatus 104 can identify video communication capabilities that are supported by each of the VoIP Apparatus 104 and the VoIP Apparatus 106. In turn, the VoIP Apparatus 104 can transmit an acknowledgment to the VoIP Apparatus 106, and begin transmitting video data 208 to the VoIP Apparatus 106 based on the video communication capabilities that are supported by each of the VoIP Apparatus 104 and the VoIP Apparatus 106. Likewise, the VoIP Apparatus 106 can transmit video data 210 to the VoIP Apparatus 104 based on the identified video communication capabilities that are supported by each of the VoIP Apparatus 104 and 106.

In some implementations, video data 208 and video data 210 are automatically transmitted upon set up of the video call. For example, after negotiation of the parameters is complete, the VoIP Apparatus 104 and VoIP Apparatus 106 can begin transmitting the video data 208 and 210 using the selected parameters without requiring user input.

In some implementations, user input is required to be received by one or more of the VoIP Apparatus 104 and/or VoIP Apparatus 106 before video data 208 and 210 are transmitted between the VoIP Apparatus 104 and VoIP Apparatus 106. For example, once the VoIP Apparatus 104 and VoIP Apparatus 106 have negotiated the video call parameters that will be used to set up a video call, a notification (e.g., a light specifying that video call capability is available or another type of notification) can be presented at the VoIP Apparatus 104 and/or the VoIP Apparatus 106. In these implementations, the video data 208 and video data 210 may not be transmitted until the notification is acknowledged (e.g., by a user) at the VoIP Apparatus 104 and/or the VoIP Apparatus 106. For example, the user at each VoIP Apparatus 104 and 106 can be required to press a button (or otherwise acknowledge the video call) before the video data 208 or 210 are transmitted.

In some implementations, the parameters that are selected for use in the video call can be selected by the VoIP Apparatus 106 in response to receiving the video call parameters 204 from the VoIP Apparatus 104. For example, in response to receiving the video call parameters 204 that are transmitting when the VoIP Apparatus 104 initiates the video call, the VoIP Apparatus 106 can identify a set of the video call parameters 204 that are supported by the VoIP Apparatus 106 (e.g., by accessing an index of supported video call parameters to identify supported video call parameters that match the video call parameters in the received video call parameters 204). In turn, the video call parameters 210 that are sent by the VoIP Apparatus 106 to the VoIP Apparatus 104 can complete the call set up, for example, by operating as an acknowledgement that the VoIP Apparatus 106 has video call capabilities, and also specifying the video call parameters that will be used for the video call. In this example, the VoIP Apparatus 104 and/or VoIP Apparatus 106 can begin transmitting the video data 208 and 210 following receipt of the video call parameters 206 by the VoIP Apparatus 104. Of course, the VoIP Apparatus 104 can send an acknowledgement to the VoIP Apparatus 106 indicating that the VoIP Apparatus 104 has received the video call parameters 206.

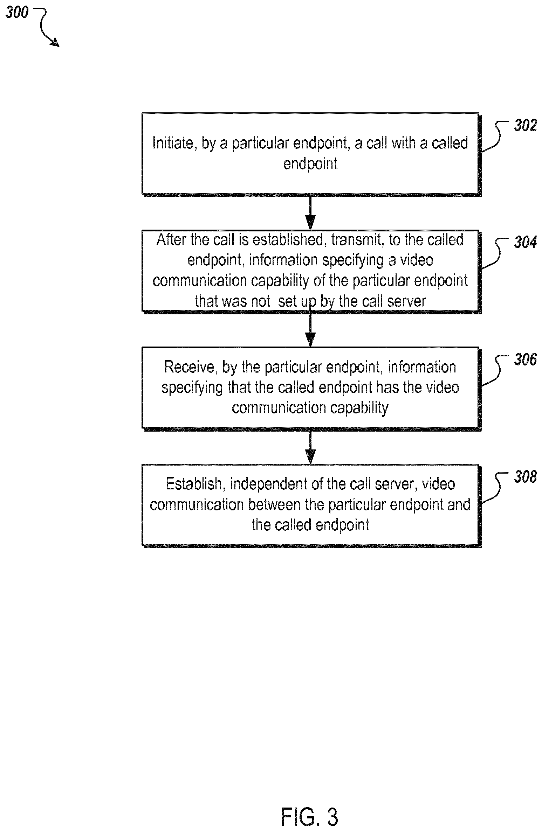

FIG. 3 is a flow chart of an example process 300 for setting up a video call independent of a call server. The process 300 can be performed by an endpoint, such as the VoIP Apparatus 104 or VoIP Apparatus 106 of FIG. 1. In some implementations, the process 300 is implemented as instructions stored on a non-transitory computer readable medium. In these implementations, execution of the instructions by an endpoint causes the endpoint to perform operations of the process 300.

A particular endpoint initiates a call with a called endpoint (302). The particular endpoint can initiate the call, for example, by sending an invite (e.g., an SIP Invite message) to a call server, which in turn sends an invite to the called endpoint. For example, as described above with reference to FIG. 1, the particular endpoint can include in the invite a set of call parameters (e.g., SDP parameters) with which the call server can negotiate a call between the particular endpoint and the called endpoint.

After initiating the call, the particular endpoint can receive from the call server a set of call parameters that will be used to establish the call between the particular endpoint and the called endpoint. As discussed above with reference to FIG. 1, the set of call parameters used to establish the call can be selected by the call server based on call parameters that were provided to the call server by each of the particular endpoint and the called endpoint. For example, the call server can select, as the call parameters that will be used to establish the call, those call parameters that were provided to the call server by both of the particular endpoint and the called endpoint. That is, the call server can identify the call parameters that are supported by each of the particular endpoint and the called endpoint, and set up the call using those identified parameters. For brevity, the set of call parameters used to set up the call will be referred to as "established call parameters."

In some implementations, the established call parameters may not include parameters related to a particular communication capability that is provided by the particular endpoint. For example, as discussed above, the set of call parameters provided to the call server by the particular endpoint may include video call parameters related to setting up a video call (e.g., a supported frame rate, supported video codecs, and/or supported video resolution), while the established call parameters may not include these video call parameters. The video call parameters may be omitted from the established call parameters, for example, because the called endpoint does not support the video call parameters, or because the call server is not capable of setting up a call based on the video call parameters (i.e., even if the called endpoint and the particular endpoint both support the video call parameters). In either case, the call that is set up by the call server will not support the video communication capabilities that are supported by the particular endpoint when the video call parameters corresponding to those capabilities are not included in the established call parameters.

After the call is established, the particular endpoint transmits, to the called endpoint, information specifying a video communication capability of the particular endpoint that was not set up in the call established by the call server (304). In some implementations, the information is transmitted by the particular endpoint over an administrative channel that facilitates data communication between the particular endpoint and the called endpoint. For example, the information can be transmitted by the particular endpoint over an RTCP channel that is available after an audio call is set up. The information specifying the video capabilities of the particular endpoint is transmitted to the called endpoint in a manner that bypasses the call server that established the audio call between the endpoints.

As discussed above, the information that is transmitted by the particular endpoint can include a set of video codecs that the particular endpoint uses to transmit video, bit rates that are supported by the particular endpoint, frame rates that are supported by the particular endpoint, display resolutions that are supported by the particular endpoint, and/or other information that facilitates setting up a video call between the particular endpoint and the called endpoint.

The particular endpoint receives information specifying that the called endpoint supports a video communication capability (306). In some implementations, the particular endpoint can receive the information from the called endpoint over an administrative channel that facilitates data communication between the particular endpoint and the called endpoint. For example, the information can be received by the particular endpoint over an RTCP channel that is available after an audio call is set up.

As discussed above, the information that is received by the particular endpoint can include a set of video codecs that are supported by the called endpoint, bit rates that are supported by the called endpoint, frame rates that are supported by the called endpoint, display resolutions that are supported by the called endpoint, and/or other information that facilitates setting up a video call between the particular endpoint and the called endpoint.

Video communication between the particular endpoint and called endpoint is established independent of the call server (308). In some implementations, the video communication is established by the particular endpoint. For example, the first endpoint can select video call parameters (e.g., video codec, frame rate, bit rate, and resolution) that are supported by each of the particular endpoint and the called endpoint in response to receiving the information specifying the video communication capabilities that are supported by the called endpoint.

In some implementations, the video communication between the particular endpoint and called endpoint is established over an administrative channel of the audio call that was previously set up by the call server. For example, the video communication between the particular endpoint and the called endpoint can occur over the RTCP channel that was established for the audio call.

The established video communication between the particular endpoint and the called endpoint facilitates the transmission of additional data (e.g., in addition to the audio data that is exchanged using the audio call that was previously set up by the call server) between the particular endpoint and the called endpoint. The additional data transmitted between the particular endpoint and the called endpoint can include, for example, live video data, whiteboard data (e.g., data that facilitates presentation of a whiteboard at each of the endpoints), or screen sharing data (e.g., data that facilitate sharing of information displayed on a screen of one of the endpoints).

As detailed above, the particular endpoint and the called endpoint negotiate the establishment of video communication capability independent of the call server. For example, the particular endpoint and called endpoint can communicate over a channel that bypasses the call server, to identify parameters that will be used to set up the video call between the particular endpoint into the second endpoint. In the example described above with respect to the process 300, the selection of the video call parameters is described as being performed by the particular endpoint that initiated the call with the called endpoint. However, the selection of the video call parameters can be performed, at least in part, by the called endpoint.

For example, as previously discussed, the called endpoint can select the video call parameters that will be used to establish a video call with the particular endpoint in response to receiving video call parameters from the particular endpoint. In turn, the called endpoint can transmit to the particular endpoint data specifying the video call parameters that will be used to establish the video call between the particular endpoint and the called endpoint. Other video call set up techniques can also be used to negotiate parameters of the video call between the particular endpoint and the called endpoint.

Additionally, although the discussion above refers to establishing a video call between two endpoints, techniques similar to those discussed above can be used to establish a video call between additional endpoints. For example, assume that three or more endpoints are included in an audio call that was set up by an audio call server. In this example, a particular endpoint (e.g., the endpoint that initiates video call set up), can transmit to each of the other endpoints data specifying video communication capabilities that are supported by that particular endpoint. Each of the endpoints that receive the information from that particular endpoint can respond with information specifying video communication capabilities that are also supported by those endpoints. In turn, the particular endpoint can proceed to establish a video call with one or more of the other endpoints based on the information received from those endpoints.

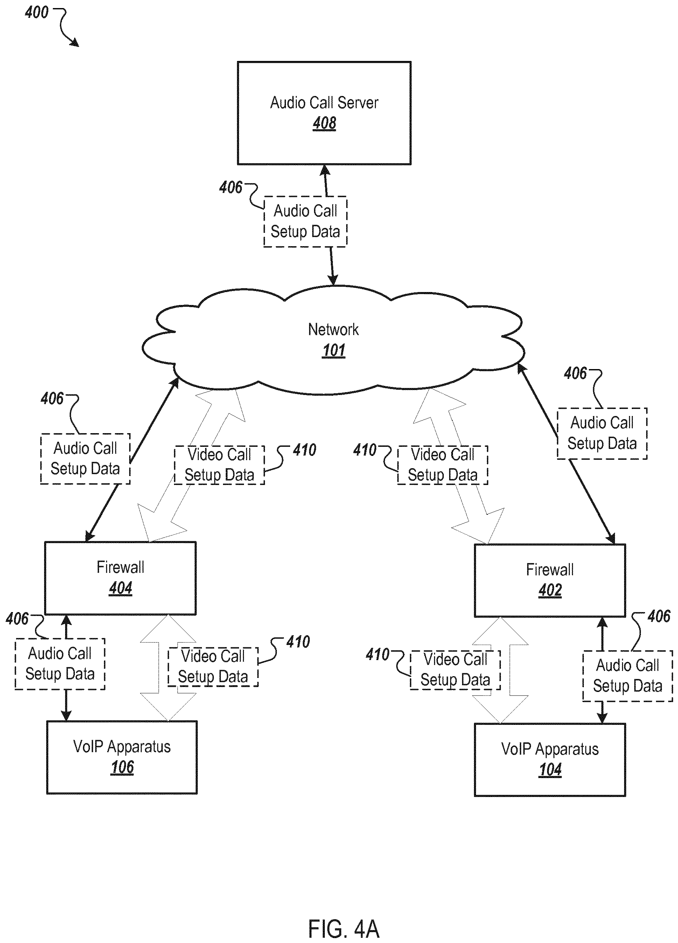

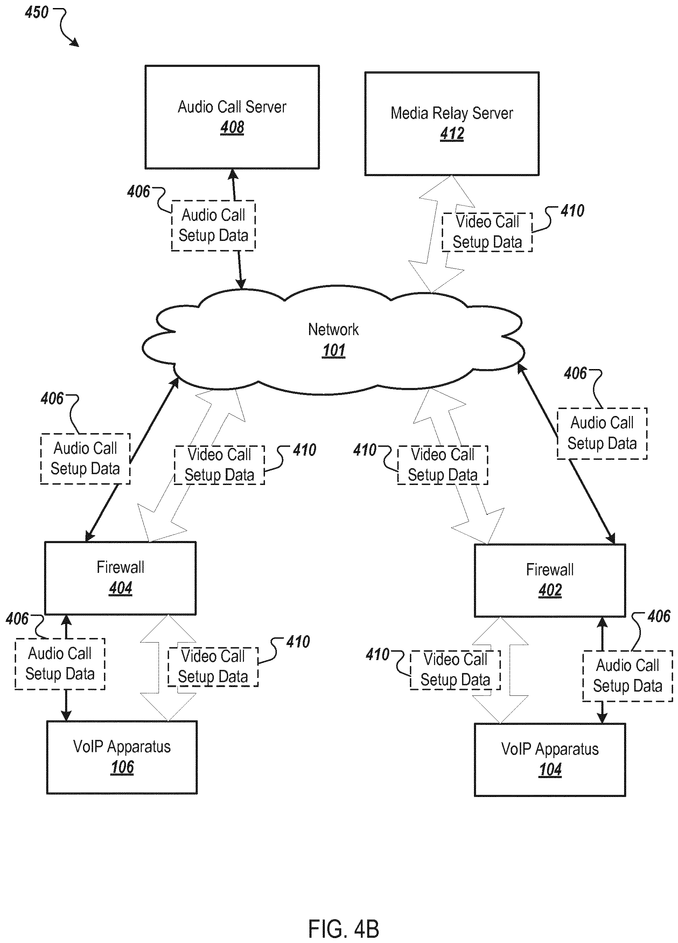

The above description of establishing a video call between two IP endpoints after an audio call has been established by an audio call refers to a basic network configuration. The description above is equally applicable to different and/or more complex network configurations. FIGS. 4A and 4B are block diagrams of additional example network configurations in which the techniques described above can be implemented.

In the configuration 400 illustrated by FIG. 4A, the VoIP Apparatus 104 is separated from the network 101 by a firewall 402, and the VoIP Apparatus 106 is separated from the network 101 by a firewall 404. As illustrated by FIG. 4A, audio call setup data 406 that are used to set up an audio call between the VoIP Apparatus 104 and the VoIP Apparatus 106 are transmitted to the audio call server 408 through the firewalls 402 and 404 and the network 101. The audio call that is set up by the audio call server 408 can be set up in a manner similar to that described above. When the audio call is set up in the network configuration 400, the audio call setup data 406 will be routed to the VoIP Apparatus 104 and the VoIP Apparatus 106 through the firewalls 402 and 404, respectively. Similarly, once the audio call has been set up by the audio call server 408, the VoIP Apparatus 104 and the VoIP Apparatus 106 can directly negotiate a video call using video call setup data 410 in a manner similar to that discussed above, but the video call data 410 exchanged between the VoIP Apparatus 104 and the VoIP Apparatus 106 will be routed through the firewall 402 and the firewall 404.

The configuration 450 illustrated by FIG. 4B is similar to the configuration 400, but the configuration 450 includes a Media Relay Server 412. In this configuration, the audio call between the VoIP Apparatus 104 and VoIP Apparatus 106 will be established in the same manner as discussed with respect to configuration 400. With respect to the establishment of the video call between the VoIP Apparatus 104 and the VoIP Apparatus 106, the video call setup data 410 that is exchanged between the VoIP Apparatus 104 and the VoIP Apparatus 106 will be routed through the Media Relay Server 412. The video call that is established using the video call setup data 410 is still set up independent of the audio call server 408 that establish the audio call between the VoIP Apparatus 104 and the VoIP Apparatus 106 because the video call setup data 410 bypasses (e.g., is not routed through) the audio call server 408, and the audio call server 408 does not negotiate the parameters of the video call using the video call setup data 410.

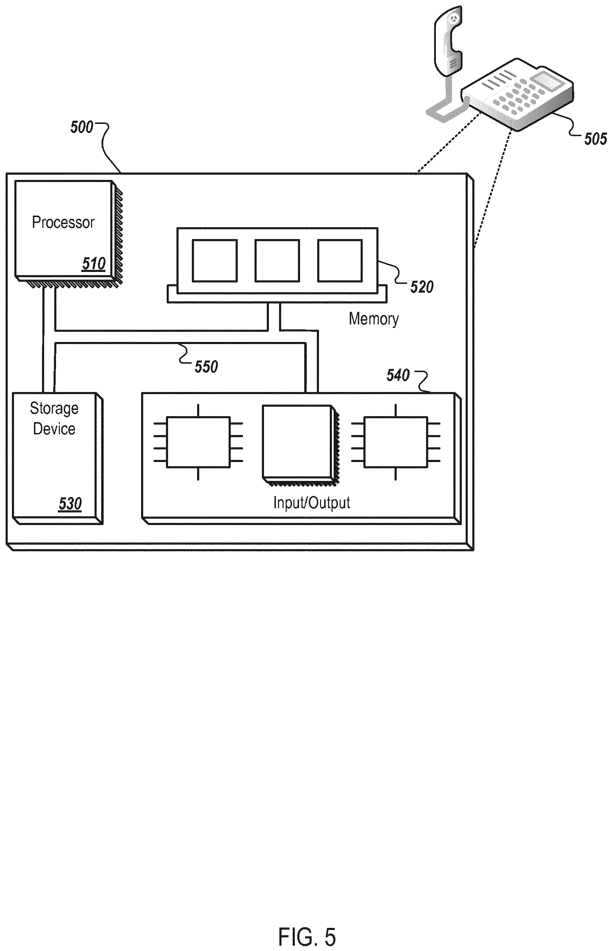

FIG. 5 is a block diagram of an example endpoint 500 that sets up video calls independent of a call server. In some implementations, the endpoint 500 is included in a desktop IP telephone 505. The example endpoint 500 can also be included in other IP communications devices, such as a mobile telephone, tablet computing device, computer, set-top box television client device, or another device that is capable of communicating over an IP network.

The endpoint 500 includes a processor 510, a memory 520, a storage device 530, and an input/output device 540. Each of the components 510, 520, 530, and 540 can be interconnected, for example, using a system bus 550. The processor 510 is capable of processing instructions for execution within the endpoint 500. In one implementation, the processor 510 is a single-threaded processor. In another implementation, the processor 510 is a multi-threaded processor. The processor 510 is capable of processing instructions stored in the memory 520 or on the storage device 530.

The memory 520 stores information within the endpoint 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the system 500. In one implementation, the storage device 530 is a computer-readable medium. In various different implementations, the storage device 530 can include, for example, a hard disk device, an optical disk device, a storage device that is shared over a network by multiple computing devices (e.g., a cloud storage device), or some other large capacity storage device.

The input/output device 540 provides input/output operations for the system 500. In one implementation, the input/output device 540 can include one or more of a network interface devices, e.g., an Ethernet card, a serial communication device, e.g., and RS-232 port, and/or a wireless interface device, e.g., and 802.11 card. In another implementation, the input/output device 540 can include driver devices configured to receive input data and send output data to other input/output devices, e.g., keyboard, printer and display devices.

Although an example endpoint has been described in FIG. 5, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method performed by data processing apparatus, the method comprising:
initiating, by a first endpoint (104) and through a call server (102), an audio call with a second endpoint (106);
after the audio call is established, transmitting, by the first endpoint over a channel that bypasses the call server, first information (204) specifying a video communication capability of the first endpoint that the call server did not setup in the established audio call, wherein said first information specifying a video communication capability of the first endpoint is transmitted over a real-time control protocol, RTCP, channel of the audio call;
receiving, by the first endpoint, second information (206) specifying that the second endpoint has the video communication capability; and
establishing, by the first endpoint and based on the first information and second information, video communication between the first endpoint and the second endpoint over a channel that bypasses the call server.

2. The method of claim 1, wherein initiating an audio call with a second endpoint comprises sending an invitation (108, 202) including a first set of call parameters to the call server, the method further comprising:
receiving, from the call server, a second set of call parameters for transmitting audio to the second endpoint, the second set of parameters not including a full set of parameters necessary to transmit video to the second endpoint; and
transmitting an acknowledgment to the call server.

3. The method of claim 1 or claim 2, wherein:
receiving second information specifying that the second endpoint has the video communication capability comprises receiving the second information over the RTCP channel.

4. The method of any of claims 1 to 3, wherein:
transmitting first information comprises transmitting a first set of video codecs that the first endpoint uses to transmit video;
receiving second information comprises receiving a second set of video codecs that the second endpoint uses to transmit video; and
establishing the video communication comprises selecting a video codec that is included in each of the first set of video codecs and a second set of video codecs.

5. The method of any of claims 1 to 4, wherein establishing the video communication over a channel that bypasses the call server comprises establishing the video communication between the first endpoint and the second endpoint over the RTCP channel.

6. The method of any of claims 1 to 5, wherein establishing the video communication comprises establishing a video communication over which whiteboard data are transmitted.

7. The method of any of claims 1 to 6, wherein establishing the video communication over a channel that bypasses the call server comprises negotiating, by the first endpoint and the second endpoint and over a channel that bypasses the call server, the parameters that will be used to setup a video call between the first endpoint and the second endpoint.

8. A communications endpoint (104) comprising:
a data storage device (520, 530) storing information specifying a video communication capability of the communications endpoint; and
one or more data processors (510) that interact with the data storage device and execute instructions that cause the communications endpoint to perform operations comprising:
initiating, through a call server (102), an audio call with a called endpoint (106);
after the audio call is established, transmitting, by the communications endpoint over a channel that bypasses the call server, first information (204) specifying a video communication capability of the communications endpoint that the call server did not setup in the established audio call, wherein said first information specifying a video communication capability of the communications endpoint is transmitted over a real-time control protocol (RTCP) channel of the audio call;
receiving, by the communications endpoint, second information (206) specifying that the called endpoint has the video communication capability; and
establishing, by the communications endpoint and based on the first information and second information, video communication between the communications endpoint and the called endpoint over a channel that bypasses the call server.

9. The communications endpoint of claim 8, wherein initiating an audio call with a called endpoint comprises sending an invitation (108, 202) including a first set of call parameters to the call server, wherein execution of the instructions cause the communications endpoint to perform operations comprising:
receiving, from the call server, a second set of call parameters for transmitting audio to the called endpoint, the second set of parameters not including a full set of parameters necessary to transmit video to the called endpoint; and
transmitting an acknowledgment to the call server.

10. The communications endpoint of claim 8 or claim 9, wherein:
receiving second information specifying that the called endpoint has the video communication capability comprises receiving the second information over the RTCP channel.

11. The communications endpoint of any of claims 8 to 10, wherein:
transmitting first information comprises transmitting a first set of video codecs that the communications endpoint uses to transmit video;
receiving second information comprises receiving a second set of video codecs that the called endpoint uses to transmit video; and
establishing the video communication comprises selecting a video codec that is included in each of the first set of video codecs and a second set of video codecs.

12. The communications endpoint of any of claims 8 to 11, wherein establishing the video communication over a channel that bypasses the call server comprises establishing the video communication between the communications endpoint and the called endpoint over the RTCP channel.

13. The communications endpoint of any of claims 8 to 12, wherein establishing the video communication comprises establishing a video communication over which whiteboard data are transmitted.

14. The communications endpoint of any of claims 8 to 13, wherein establishing the video communication over a channel that bypasses the call server comprises negotiating, by the communications endpoint and the called endpoint and over a channel that bypasses the call server, the parameters that will be used to setup a video call between the communications endpoint and the called endpoint.

15. A computer program comprising instructions that when executed by computer apparatus control it to perform the method of any of claims 1 to 7.

## Patentansprüche

1. Verfahren, das von einer Datenverarbeitungsvorrichtung ausgeführt wird, wobei das Verfahren umfasst:
Einleiten, durch einen ersten Endpunkt (104) und über einen Anrufserver (102), eines Audioanrufs bei einem zweiten Endpunkt (106);
nachdem der Audioanruf aufgebaut ist, Übertragen, durch den ersten Endpunkt über einen Kanal, welcher den Anrufserver umgeht, erster Informationen (204), die eine Videokommunikationsfähigkeit des ersten Endpunktes angeben, welche der Anrufserver in dem aufgebauten Audioanruf nicht aufgebaut hat, wobei die ersten Informationen, die eine Videokommunikationsfähigkeit des ersten Endpunktes angeben, über einen Echtzeitsteuerprotokoll(Real-Time Control Protocol, RTCP)-Kanal des Audioanrufs übertragen werden;
Empfangen, durch den ersten Endpunkt, zweiter Informationen (206), die angeben, dass der zweite Endpunkt die Videokommunikationsfähigkeit aufweist; und
Aufbauen, durch den ersten Endpunkt und basierend auf den ersten Informationen und zweiten Informationen, einer Videoverbindung zwischen dem ersten Endpunkt und dem zweiten Endpunkt über einen Kanal, welcher den Anrufserver umgeht.

2. Verfahren nach Anspruch 1, wobei das Einleiten eines Audioanrufs bei einem zweiten Endpunkt das Senden einer Einladung (108, 202), die einen ersten Satz von Anrufparametern beinhaltet, an den Anrufserver umfasst, wobei das Verfahren ferner umfasst:
Empfangen, vom Anrufserver, eines zweiten Satzes von Anrufparametern zum Übertragen von Audio an den zweiten Endpunkt, wobei der zweite Satz von Parametern keinen vollständigen Satz von Parametern beinhaltet, die erforderlich sind, um Video an den zweiten Endpunkt zu übertragen; und Übertragen einer Bestätigung an den Anrufserver.

3. Verfahren nach Anspruch 1 oder Anspruch 2, wobei:
das Empfangen zweiter Informationen, die angeben, dass der zweite Endpunkt die Videokommunikationsfähigkeit aufweist, das Empfangen der zweiten Informationen über den RTCP-Kanal umfasst.

4. Verfahren nach einem der Ansprüche 1 bis 3, wobei:
das Übertragen erster Informationen das Übertragen eines ersten Satzes von Videocodecs umfasst, welche der erste Endpunkt verwendet, um Video zu übertragen;
das Empfangen zweiter Informationen das Empfangen eines zweiten Satzes von Videocodecs umfasst, welche der zweite Endpunkt verwendet, um Video zu übertragen; und
das Aufbauen der Videoverbindung das Auswählen eines Videocodecs umfasst, welcher sowohl im ersten Satz von Videocodecs als auch im zweiten Satz von Videocodecs enthalten ist.

5. Verfahren nach einem der Ansprüche 1 bis 4, wobei das Aufbauen der Videoverbindung über einen Kanal, welcher den Anrufserver umgeht, das Aufbauen der Videoverbindung zwischen dem ersten Endpunkt und dem zweiten Endpunkt über den RTCP-Kanal umfasst.

6. Verfahren nach einem der Ansprüche 1 bis 5, wobei das Aufbauen der Videoverbindung das Aufbauen einer Videoverbindung umfasst, über welche Whiteboard-Daten übertragen werden.

7. Verfahren nach einem der Ansprüche 1 bis 6, wobei das Aufbauen der Videoverbindung über einen Kanal, welcher den Anrufserver umgeht, das Aushandeln, durch den ersten Endpunkt und den zweiten Endpunkt und über einen Kanal, welcher den Anrufserver umgeht, der Parameter umfasst, welche danach verwendet werden, um einen Videoanruf zwischen dem ersten Endpunkt und dem zweiten Endpunkt aufzubauen.

8. Kommunikationsendpunkt (104), umfassend:
eine Datenspeichervorrichtung (520, 530), die Informationen speichert, die eine Videokommunikationsfähigkeit des Kommunikationsendpunktes angeben; und
einen oder mehrere Datenprozessoren (510), welche mit der Datenspeichervorrichtung interagieren und Anweisungen ausführen, welche den Kommunikationsendpunkt veranlassen, Operationen auszuführen, welche umfassen:
Einleiten, durch einen Anrufserver (102), eines Audioanrufs bei einem gerufenen Endpunkt (106);
nachdem der Audioanruf aufgebaut worden ist, Übertragen, durch den Kommunikationsendpunkt über einen Kanal, welcher den Anrufserver umgeht, erster Informationen (204), die eine Videokommunikationsfähigkeit des Kommunikationsendpunktes angeben, welche der Anrufserver in dem aufgebauten Audioanruf nicht aufgebaut hat, wobei die ersten Informationen, die eine Videokommunikationsfähigkeit des Kommunikationsendpunktes angeben, über einen Echtzeitsteuerprotokoll(Real-Time Control Protocol, RTCP)-Kanal des Audioanrufs übertragen werden;
Empfangen, durch den Kommunikationsendpunkt, zweiter Informationen (206), die angeben, dass der gerufene Endpunkt die Videokommunikationsfähigkeit aufweist; und
Aufbauen, durch den Kommunikationsendpunkt und basierend auf den ersten Informationen und zweiten Informationen, einer Videoverbindung zwischen dem Kommunikationsendpunkt und dem gerufenen Endpunkt über einen Kanal, welcher den Anrufserver umgeht.

9. Kommunikationsendpunkt nach Anspruch 8, wobei das Einleiten eines Audioanrufs bei einem gerufenen Endpunkt das Senden einer Einladung (108, 202), die einen ersten Satz von Anrufparametern beinhaltet, an den Anrufserver umfasst, wobei eine Ausführung der Anweisungen den Kommunikationsendpunkt veranlasst, Operationen auszuführen, welche umfassen:
Empfangen, vom Anrufserver, eines zweiten Satzes von Anrufparametern zum Übertragen von Audio an den gerufenen Endpunkt, wobei der zweite Satz von Parametern keinen vollständigen Satz von Parametern beinhaltet, die erforderlich sind, um Video an den gerufenen Endpunkt zu übertragen; und Übertragen einer Bestätigung an den Anrufserver.

10. Kommunikationsendpunkt nach Anspruch 8 oder Anspruch 9, wobei:
das Empfangen zweiter Informationen, die angeben, dass der gerufene Endpunkt die Videokommunikationsfähigkeit aufweist, das Empfangen der zweiten Informationen über den RTCP-Kanal umfasst.

11. Kommunikationsendpunkt nach einem der Ansprüche 8 bis 10, wobei:
das Übertragen erster Informationen das Übertragen eines ersten Satzes von Videocodecs umfasst, welche der Kommunikationsendpunkt verwendet, um Video zu übertragen;
das Empfangen zweiter Informationen das Empfangen eines zweiten Satzes von Videocodecs umfasst, welche der gerufene Endpunkt verwendet, um Video zu übertragen; und
das Aufbauen der Videoverbindung das Auswählen eines Videocodecs umfasst, welcher sowohl im ersten Satz von Videocodecs als auch im zweiten Satz von Videocodecs enthalten ist.

12. Kommunikationsendpunkt nach einem der Ansprüche 8 bis 11, wobei das Aufbauen der Videoverbindung über einen Kanal, welcher den Anrufserver umgeht, das Aufbauen der Videoverbindung zwischen dem Kommunikationsendpunkt und dem gerufenen Endpunkt über den RTCP-Kanal umfasst.

13. Kommunikationsendpunkt nach einem der Ansprüche 8 bis 12, wobei das Aufbauen der Videoverbindung das Aufbauen einer Videoverbindung umfasst, über welche Whiteboard-Daten übertragen werden.

14. Kommunikationsendpunkt nach einem der Ansprüche 8 bis 13, wobei das Aufbauen der Videoverbindung über einen Kanal, welcher den Anrufserver umgeht, das Aushandeln, durch den Kommunikationsendpunkt und den gerufenen Endpunkt und über einen Kanal, welcher den Anrufserver umgeht, der Parameter umfasst, welche danach verwendet werden, um einen Videoanruf zwischen dem Kommunikationsendpunkt und dem gerufenen Endpunkt aufzubauen.

15. Computerprogramm, welches Anweisungen umfasst, die, wenn sie von einer Computervorrichtung ausgeführt werden, diese so steuern, dass sie das Verfahren nach einem der Ansprüche 1 bis 7 ausführt.

## Revendications

1. Procédé exécuté par un appareil de traitement de données, le procédé comprenant :
l'exécution, par un premier point d'extrémité (104) et par le biais d'un serveur d'appels (102), d'un appel audio avec un second point d'extrémité (106) ;
après l'établissement de l'appel audio, la transmission, par le premier point d'extrémité sur un canal qui contourne le serveur d'appel, de premières informations (204) qui spécifient une capabilité de communication vidéo du premier point d'extrémité que le serveur d'appel n'a pas établie dans l'appel audio établi, dans lequel lesdites premières informations spécifiant une capabilité de communication vidéo du premier point d'extrémité sont transmises sur un canal à protocole de commande en temps réel, RTCP, de l'appel audio ;
la réception, par le premier point d'extrémité, de secondes informations (206) qui spécifient que le second point d'extrémité possède la capabilité de communication vidéo ; et
l'établissement, par le premier point d'extrémité et en fonction des premières informations et des secondes informations, d'une communication vidéo entre le premier point d'extrémité et le second point d'extrémité sur un canal qui contourne le serveur d'appel.

2. Procédé selon la revendication 1, dans lequel l'exécution d'un appel audio d'un second point d'extrémité comprend l'envoi d'une invitation (108, 202) comportant un premier ensemble de paramètres d'appel au serveur d'appel, le procédé comprenant en outre :
la réception, depuis le serveur d'appel, d'un second ensemble de paramètres d'appel pour transmettre l'audio au second point d'extrémité, le second ensemble de paramètres ne comportant pas l'ensemble complet de paramètres nécessaires pour transmettre de la vidéo au second point d'extrémité ; et
la transmission d'un acquittement au serveur d'appel.

3. Procédé selon la revendication 1 ou la revendication 2, dans lequel :
la réception de secondes informations spécifiant que le second point d'extrémité possède la capabilité de communication vidéo comprend la réception des secondes informations sur le canal RTCP.

4. Procédé selon l'une quelconque des revendications 1 à 3, dans lequel :
la transmission de premières informations comprend la transmission d'un premier ensemble de codecs vidéo que le premier point d'extrémité utilise pour transmettre de la vidéo ;
la réception de secondes informations comprend la réception d'un second ensemble de codecs vidéo que le second point d'extrémité utilise pour transmettre de la vidéo ; et
l'établissement de la communication vidéo comprend la sélection d'un codec vidéo qui est inclus dans chacun du premier ensemble de codecs vidéo et d'un second ensemble de codecs vidéo.

5. Procédé selon l'une quelconque des revendications 1 à 4, dans lequel l'établissement de la communication vidéo sur un canal qui contourne le serveur d'appel comprend l'établissement de la communication vidéo entre le premier point d'extrémité et le second point d'extrémité sur le canal RTCP.

6. Procédé selon l'une quelconque des revendications 1 à 5, dans lequel l'établissement de la communication vidéo comprend l'établissement d'une communication vidéo sur laquelle des données de tableau blanc sont transmises.

7. Procédé selon l'une quelconque des revendications 1 à 6, dans lequel l'établissement de la communication vidéo sur un canal qui contourne le serveur d'appel comprend la négociation, par le premier point d'extrémité et le second point d'extrémité et sur un canal qui contourne le serveur d'appel, des paramètres qui seront utilisés pour établir un appel vidéo entre le premier point d'extrémité et le second point d'extrémité.

8. Point d'extrémité de communications (104) comprenant :
un dispositif de mémorisation de données (520, 530) mémorisant des informations spécifiant une capabilité de communication vidéo du point d'extrémité de communication ; et
un ou plusieurs processeurs de données (510) qui interagissent avec le dispositif de mémorisation de données et exécutent des instructions qui amènent le point d'extrémité de communication à exécuter des opérations comprenant :
l'exécution, par le biais d'un serveur d'appel (102), d'un appel audio avec un point d'extrémité appelé (106) ;
après l'établissement de l'appel audio, la transmission, par le point d'extrémité de communications sur un canal qui contourne le serveur d'appel, de premières informations (204) qui spécifient une capabilité de communication vidéo du point d'extrémité de communications que le serveur d'appel n'a pas établie dans l'appel audio établi, dans lequel lesdites premières informations spécifiant une capabilité de communication vidéo du point d'extrémité de communications sont transmises sur un canal à protocole de commande en temps réel, RTCP, de l'appel audio ;
la réception, par le point d'extrémité de communications, de secondes informations (206) qui spécifient que le point d'extrémité appelé possède la capabilité de communication vidéo ; et
l'établissement, par le point d'extrémité de communications et en fonction des premières informations et des secondes informations, d'une communication vidéo entre le point d'extrémité de communications et le point d'extrémité appelé sur un canal qui contourne le serveur d'appel.

9. Point d'extrémité de communications selon la revendication 8, dans lequel l'exécution d'un appel audio d'un point d'extrémité appelé comprend l'envoi d'une invitation (108, 202) comportant un premier ensemble de paramètres d'appel au serveur d'appel, dans lequel l'exécution des instructions amène le point d'extrémité de communications à exécuter des opérations comprenant :
la réception, depuis le serveur d'appel, d'un second ensemble de paramètres d'appel pour transmettre l'audio au second point d'extrémité, le second ensemble de paramètres ne comportant pas l'ensemble complet de paramètres nécessaires pour transmettre de la vidéo au second point d'extrémité ; et
la transmission d'un acquittement au serveur d'appel.

10. Point d'extrémité de communications selon la revendication 8 ou la revendication 9, dans lequel la réception de secondes informations spécifiant que le point d'extrémité appelé possède la capabilité de communication vidéo comprend la réception des secondes informations sur le canal RTCP.

11. Point d'extrémité de communications selon l'une quelconque des revendications 8 à 10, dans lequel
la transmission de premières informations comprend la transmission d'un premier ensemble de codecs vidéo que le premier point d'extrémité utilise pour transmettre de la vidéo ;
la réception de secondes informations comprend la réception d'un second ensemble de codecs vidéo que le second point d'extrémité utilise pour transmettre de la vidéo ; et
l'établissement de la communication vidéo comprend la sélection d'un codec vidéo qui est inclus dans chacun du premier ensemble de codecs vidéo et d'un second ensemble de codecs vidéo.

12. Point d'extrémité de communications selon l'une quelconque des revendications 8 à 11, dans lequel l'établissement de la communication vidéo sur un canal qui contourne le serveur d'appel comprend l'établissement de la communication vidéo entre le point d'extrémité de communications et le point d'extrémité appelé sur le canal RTCP.

13. Point d'extrémité de communications selon l'une quelconque des revendications 8 à 12, dans lequel l'établissement de la communication vidéo comprend l'établissement d'une communication vidéo sur laquelle des données de tableau blanc sont transmises.

14. Point d'extrémité de communications selon l'une quelconque des revendications 8 à 13, dans lequel l'établissement de la communication vidéo sur un canal qui contourne le serveur d'appel comprend la négociation, par le point d'extrémité de communications et le point d'extrémité appelé et sur un canal qui contourne le serveur d'appel, des paramètres qui seront utilisés pour établir un appel vidéo entre le point d'extrémité de communications et le point d'extrémité appelé.

15. Programme informatique comprenant des instructions qui, à leur exécution par un appareil informatique, le commandent pour exécuter le procédé selon l'une quelconque des revendications 1 à 7.
